# EUROPEAN PATENT APPLICATION

(11) **EP 2 409 818 A1**
(43) Date of publication of application: **25.01.2012**
(21) Application number: 11174553.5
(22) Date of filing: 19.07.2011
(51) Int. Cl.: B26D 1/03

(54) **Automated system and device for trimming photovoltaic modules**

(30) Priority: 20.07.2010 IT PD20100229
(71) Applicant: 2BG S.r.l., 35018 San Martino di Lupari (PD) (IT)
(72) Inventor: Bernardi, Dario, I-35010 Carmignano di Brenta, PADOVA (IT); Galiazzo, Antonio, I-35018 San Martino di Lupari, PADOVA (IT); Guidolin, Javier, I-31050 Vedelago, TREVISO (IT)
(74) Representative: Mitola, Marco

(57) **Abstract**

The invention relates to a trimming device for photovoltaic modules comprising a support structure 10 and two blades 20' and 20" to bring into contact with the modules to remove the material B irregularly exceeding from their outline P. The device comprises damping means 30 which connect the blade 20 to the support structure 10 and allow the blade 20 to move elastically in relation to said support structure along at least one adjustment axis X substantially orthogonal to the cutting line 21 of the blade 20 so as to enable the cutting line 21 to follow the outline P of the modules M during the relative movement in relation to the module (M). The two blades 20', 20" extending from the same side of said support structure (10) and being positioned in relation to each other with their respective cutting portions 21 pointing to opposite directions along a direction of relative movement T so as to remove the material B exceeding in both opposite directions of movement along said direction T.

## Description

### Sphere of application

The present invention relates to an automated system and device for trimming photovoltaic modules"

### State of the art

Generally speaking the production of a photovoltaic module comprises the following operating steps:

- welding of the individual photovoltaic cells into series to form strings;

- positioning of the strings on glass and interconnection of the same to form a module;

- completion of the module with the application of protective gluing layers;

- lamination of the module;

- trimming of the edges of the module;

- attachment of frames and of the external electric contacts box;

- final test.

Generally the steps listed above, except for the trimming step, are conducted in an automated manner.

Automation of the trimming step is difficult to achieve except at very high costs on account of various technological factors which as of today have proven difficult to resolve, such as for example the accurate centring of the module, the repeatability of the operation, the precision in detecting where to start trimming, precision in following the irregularities of the glass and high maintenance.

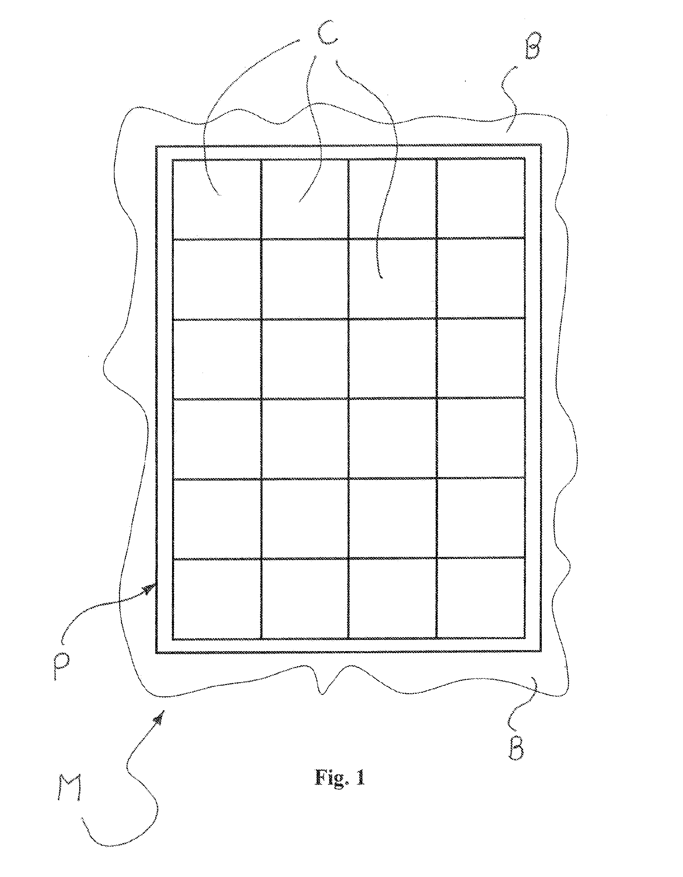

More in detail, as shown schematically in Figure 1 attached, after the lamination step the photovoltaic module M presents a very uneven edge B which must be removed to permit final use of said module. The uneven edge B is formed during the lamination step when the gluing and protective materials applied to the module M melt and exceed from the outline of the module M (corresponding to the outline of the glass support of the cells C). The unevenness of the edge B makes it very difficult to detect the outline P of the module and therefore hard to repeat the trimming operation.

Despite extremely high production costs, related both to the intensive labour required and the production waste, as of today, it is still economically and operatively preferable to perform trimming operations manually.

The automatic trimming systems currently present on the market in fact entail considerably complex automation with high initial investment and running/maintenance costs. Moreover, such systems require the intervention of specialised, highly experienced staff.

### Presentation of the invention

Consequently, the purpose of the present invention is to overcome the drawbacks of the prior art mentioned above by providing a trimming device able to automate trimming in a simple and operatively efficient manner.

A further purpose of the present invention is to provide a device which is simple and economical to produce.

A further purpose of the present invention is to provide an automated system for trimming photovoltaic modules which is operatively simple and economical to set up.

### Brief description of the drawings

The technical characteristics of the invention, according to the aforementioned purposes, are clearly evident from the contents of the following claims and the advantages of the same will be clearer from the detailed description which follows, made with reference to the appended drawings, showing one or more embodiments by way of non-limiting examples, wherein

- Figure 1 shows a schematic view of a photovoltaic module before trimming with the material exceeding unevenly from the outline of said module;

-Figure 2 shows a perspective view of a trimming device according to a preferred embodiment of the present invention;

- Figures 3 and 4 respectively show a view from above and a side view in the direction of the arrow IV of the device shown in Figure 2;

-Figures 5 and 6 show a side view of the device in Figure 2 with a blade respectively in a working position and a rest position;

-Figure 7 shows a partially exploded view of a detail of Figure 2 relative to a blade-holder group;

-Figure 8 shows a first side view of the device in Figure 7 in an assembled condition, in the direction of the arrow VIII therein shown;

-Figure 9 shows a second side view of the device in Figure 7 in an assembled condition in the direction of the arrow IX therein shown;

-Figure 10 shows a perspective view of the automated trimming system of photovoltaic modules made according to a preferred embodiment of the invention, with a robot shown during the step of picking up a photovoltaic module from a pre-positioning station;

-Figures 11 and 12 respectively show a perspective view and a view from above of the automated trimming system shown in Figure 10, with the robot shown during the step of positioning a photovoltaic module in a trimming station; and

-Figure 13 schematically shows a photovoltaic module about to be brought into contact with a trimming device according to the invention, the module being shown on a smaller scale than the device for graphic requirements.

### Detailed description

With reference to the appended drawings, reference numeral globally denotes a trimming device and reference numeral 100 an automated trimming system according to the invention.

According to a general embodiment of the invention, the trimming device 1 comprises a support structure 10, defining a reference plane m and two separate blades 20', 20" which are connected to the support structure 10 and are to be brought into contact with a module M in a direction of relative movement T substantially parallel to said reference plane m to remove the material B which exceeds unevenly from the outline P of the module,

With reference to the direction of relative movement T the expression "substantially parallel to the reference plane m" also aims to cover directions of relative movement not perfectly parallel to the reference plane m, but incident to it with a slight inclination, for example less than 45°.

The two blades 20', 20" extend from the support structure 10 on the same side as the reference plane m so as to come into contact with the module M on the same side as a plane passing through the aforesaid direction of relative movement T.

The device 1 comprises damping means 30 for each blade 20', 20" which connect the respective blade 20 to the support structure 10 and allow the blade 20 to move elastically in relation to the support structure 10 along at least one adjustment axis X substantially orthogonal to the cutting line 21 of the blade 20 so as to enable said cutting line 21 to follow the outline P of the modules M during the relative movement in relation to the module M,

The elastic movement of each blade 20', 20" enabled by the damping means 30 enables the blade to keep in close contact with the outline P of the module, adapting to the different positions and directions in which the modules are presented to the blade for trimming. Efficient trimming is thereby ensured with complete removal of the excess material and, at the same time, a reduction of the risk of damaging the module itself.

The ability of each blade to adjust thereby considerably simplifies control of the relative movement between the blade and module. In other words, thanks to the ability of the blade to adapt, the tolerance with which the relative movement of the blade in relation to the module is performed is improved in terms of direction of movement and pressure applied between the parts in contact. This greatly simplifies control of the trimming operation.

Conversely, in the presence of a fixed blade, the relative movement between the parts must be much more precise to prevent, for example, that the cutting of the excess material takes place along a path not corresponding to the outline P of the module. The risk is either of performing a poor quality trim, with partial or uneven removal of the material in excess, or, vice versa, of cutting into the module itself, splintering or abrading the glass support.

The blade's ability to adapt is correlated to the excursion limits imposed by the damping means. As described further below with reference to the automated trimming system which the present invention relates to, this limit to the adaptability of the blade may be advantageously overcome by a suitable pre-positioning of the module before trimming.

The support structure 10 of the trimming device 1 may have any configuration suitable for the purpose.

According to a preferred embodiment shown in the appended Drawings, the support structure may consist of a reticular frame, composed of beams interconnected so as to ensure a high degree of stability and rigidity. Above the centrally positioned frame is a beam 10a for the attachment of the blade 20 and the relative damping means.

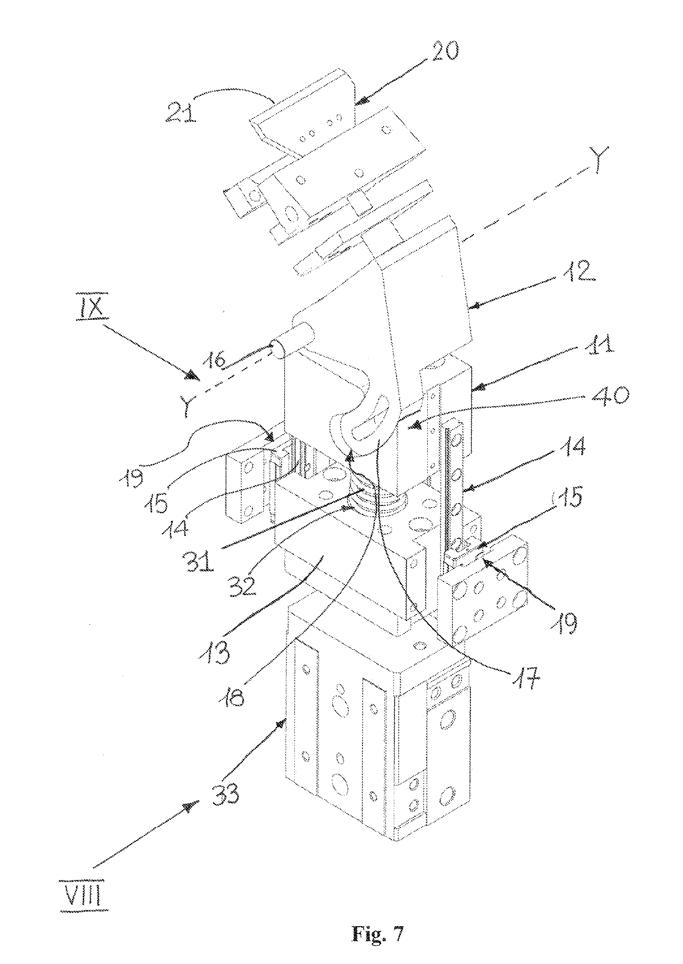

According to an embodiment shown in particular in Figures 7, 8 and 9, the device 1 comprises a support head 11 for the blade 20. The support head 11 is connected to the support structure 10 in a sliding manner along said adjustment axis X by means of the aforesaid damping means 30.

Advantageously, the device 1, comprises a blade-holder group for each blade, globally denoted by reference numeral 2, to which the damping means 30 are associated.

More in detail, the blade-holder group 2 comprises the aforesaid support head 11, moving along the aforesaid adjustment axis X, to which the blade itself is rigidly attached, and a base 13, rigidly attached to the support structure of the device 1.

As may be observed, in particular in Figure 7, the movement along the axis X is controlled by guides 14, preferably of the recirculating ball type.

More in detail, two seats 19 are made on the two opposite sides of the base 13 inside each of which a recirculating ball slide guide 15 is attached. A guide 14, attached to the support head 11, is inserted inside each slide 15 so as to slide.

According to a first embodiment solution not shown in the appended Drawings, the damping means 30 comprise solely a spring 31 which is placed between the support head 11 and the base 13 to act along the adjustment axis X.

Preferably, the spring 31 is of the helical compression spring type and is housed in two dedicated housing slots 32 made on two counter-facing sides of the support head 11 and of the base 12.

The damping means 30 comprise at least one linear actuator 33, in addition to or alternatively to the aforesaid spring 31.

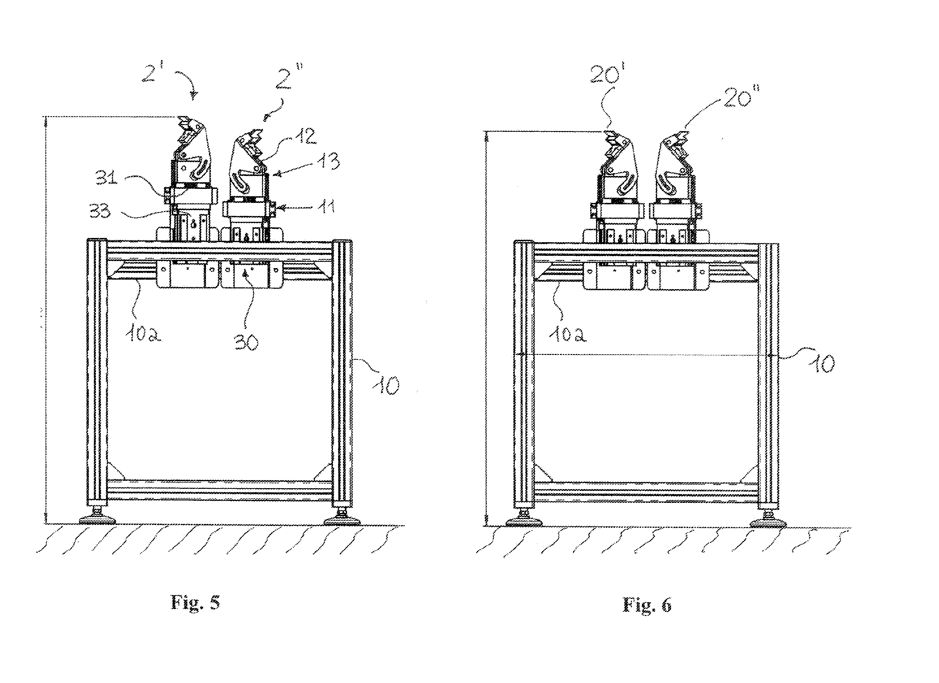

Preferably, the linear actuator consists of a pneumatic cylinder 33. As illustrated further on, the pneumatic cylinder is used essentially to move the support head along the adjustment axis X in a controlled manner, as shown in Figures 5 and 6 showing a blade-holder group in a raised position (Figure 5) and in a lowered position (Figure 6).

Functionally, the pneumatic cylinder adds an additional damping capacity when provided in addition to the compression spring.

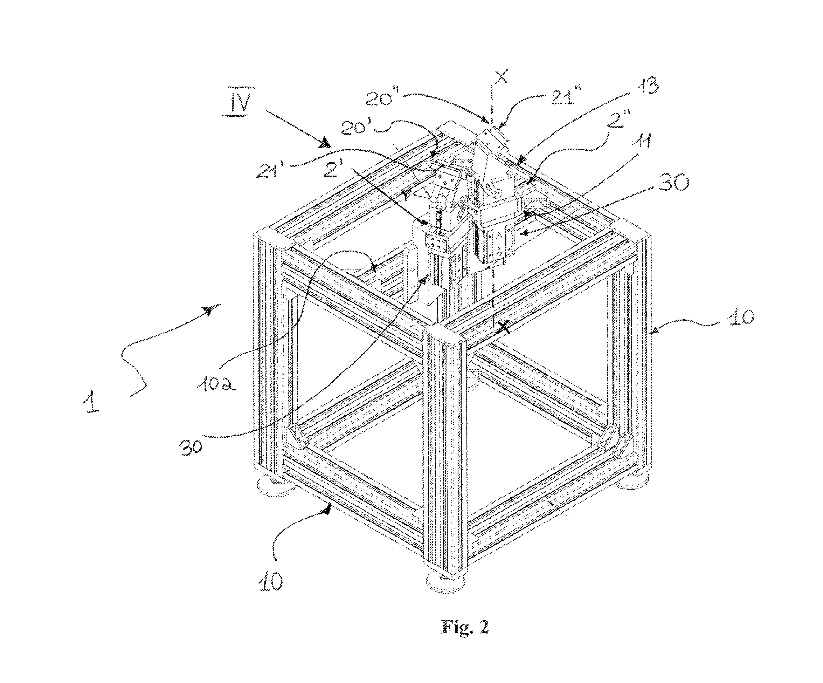

More in detail, according to an embodiment described in particular in Figure 2, the pneumatic cylinder 33 is associated to the support structure 10 of the device 1, in particular to the aforementioned central beam 10a of the frame, preferably by means of one or more guides 34, for example of the recirculating ball type. The base 13 of the blade-holder group 2 is in turn rigidly attached to the cylinder. The linear movement of the cylinder is transmitted to the support head 11 by the base 13.

Alternative embodiments of the invention may be envisaged wherein the damping means comprise only the aforesaid linear actuator 33.

Advantageously, the device 1 may be provided with means of heating the blade 20 (not shown in the appended drawings) so as to induce a partial softening of the material B which exceeds from the outline P of the module and thereby facilitate its removal. Such heating means comprise, in particular, at least one resistor and a thermocouple, suitable to ensure constant functioning parameters.

Advantageously, the device 1 may comprise means 40 for adjusting the inclination α of each blade 20', 20" in relation to a predefined reference plane m, which is preferably orthogonal to the axis X. The inclination angle α substantially defines the working angle of the blade and is therefore a parameter which needs to be controlled.

According to a preferred embodiment shown in particular in Figure 7, the support head 11 of the blade-holder group 2 is provided with a mobile portion 12 which rigidly holds the blade 20. Such mobile portion 12 may assume different angular positions around a regulation axis Y substantially parallel to the cutting line 21 of the blade 20 in order to vary the inclination α of said blade 20 in relation to the predefined reference plane m.

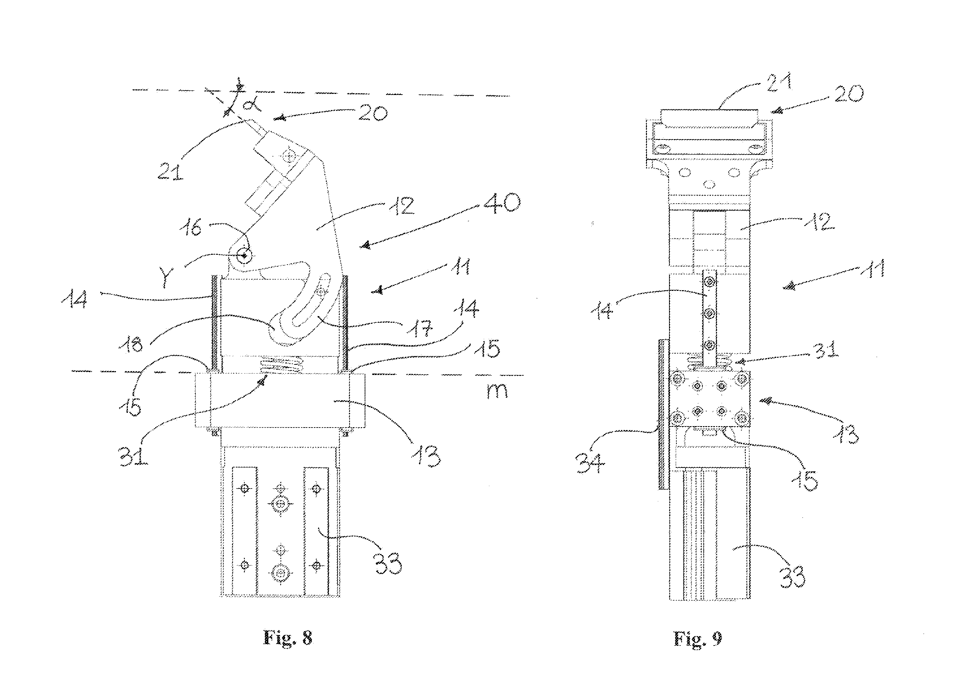

More in detail, as shown in detail in Figure 8, the mobile portion 12 is hinged to the support head 13 by means of a rotation pin 16. At least one slotted appendage 17 extends from the mobile portion 12, which inserts so as to slide in a seat 18 made in the head 13. The angular position of the mobile portion 12 is fixed by means of blocking means acting on the slotted appendage17, and on the seat 18.

The trimming device 1 is provided with two blade-holder groups 2' and 2", each with a blade 20', 20" and with independent damping means 30.

The two blades 20', 20" are positioned to each other with their respective cutting portions 21 pointing to opposite directions along the direction of relative movement T so as to remove the material B exceeding in both opposite directions of movement along the direction of relative movement T.

"Opposite direction" of the cutting portions along the direction of relative movement T is taken to mean that the inclination α of one blade 20' is opposite in direction to the other blade 20". In absolute value the inclinations of the two blades 20' and 20" may be the same or different.

The two blades may be positioned with the cutting portions facing each other or with the cutting portions not facing each other, as shown in the appended Drawings.

The use of two blades facing in opposite directions makes it relatively simple to overcome the problem of removing material at both the edges defining one side of the outline of a module M.

More in detail, to ensure the removal of material at both edges using a single blade in a fixed direction, it would be necessary to remove the material exactly on one of the rims to then continue as far as the opposite edge following the outline. If the removal of material were to begin in point other than the edge, the material between the edge and such point of commencement could not be removed. The positioning of the blade at the edge would therefore need to be controlled with great accuracy, not just to ensure the complete removal of the material, but also to prevent the blade from colliding with the adjacent side and splintering the edge.

Using two blades rather, facing in opposite directions along a direction of relative movement T, it is possible to begin removal in any intermediate point of a side of the outline P of the module. Thanks to the trimming device of the present invention and therefore to the adjustment capacity of the blade this positioning of the blade does not require precise control. In operative term, the material is removed with a first blade 20' from the aforesaid intermediate starting point as far as the first edge, in a first removal direction corresponding to the direction of such first blade. The removal operation from the intermediate point (or close to it) is completed with the second blade 20" as far as the second edge, determining a relative movement between the module and the second blade in the direction opposite the first.

This way the problems related to the positioning of the blade next to the edge when beginning to trim one side of the module M are avoided.

Preferably, the damping means 30 of one blade 20' are separate from the damping means of the other blade 20", so as to permit them to be controlled independently.

To prevent the module from interfering with the non-active blade during the transfer from one blade to the other, it is preferable to position the two blades at different heights using the linear actuator 33 mentioned above, which each blade is preferably provided with. In particular, it is possible for example to raise the active blade and keep the non-active blade lowered (see Figures 5 and 6).

In operative terms, the two linear actuators 33 make it possible to move the support head 11 of one blade (20') along the adjustment axis X independently of the other blade 20" so as to differentiate the position of one blade from the other in relation to the reference plane m.

Advantageously, the two blades 20' and 20" (and the relative blade-holder groups) may be placed next to each other so as to reduce encumbrance. Thanks to the presence of such linear actuators 33 and the possibility of controlling the movement of each blade 20', 20" along the axis X separately and distinctly, the close positioning of the two blades 20', 20" does not cause operating problems during the trimming of the module, such as obstruction of the active blade by the non-active blade.

Advantageously, as will be illustrated further on, with reference to the automated trimming system according to the invention, the two blades 20', 20" are positioned so that the respective cutting lines 21' and 1" are angled to each other.

The present invention relates to an automated trimming system of photovoltaic modules, globally denoted by reference numeral 100 in the Drawings.

According to a general embodiment the automated trimming system 100 comprises:

- at least one trimming device 1 according to the invention; and

- movement means 110 to bring a photovoltaic module M and the blade 20 of the trimming device 1 into reciprocal contact and to determine a relative movement between the cutting line 21 of the blade 20 and the outline P of the module M with pressure between the parts.

The system 1 comprises at least one trimming device 1 provided with two blades 20' and 20". The movement means 100 are programmed to bring the module into contact with both blades in sequence, as already described.

Preferably, the trimming device 1 is in a fixed position. It is therefore the photovoltaic modules which have to be moved and brought into contact with the blade or blades 20 by the movement means 110.

According to alternative embodiments not shown in the appended drawings, it is possible to envisage that the trimming device is mobile and the module M to be trimmed is rather held firm, at least for the trimming operations.

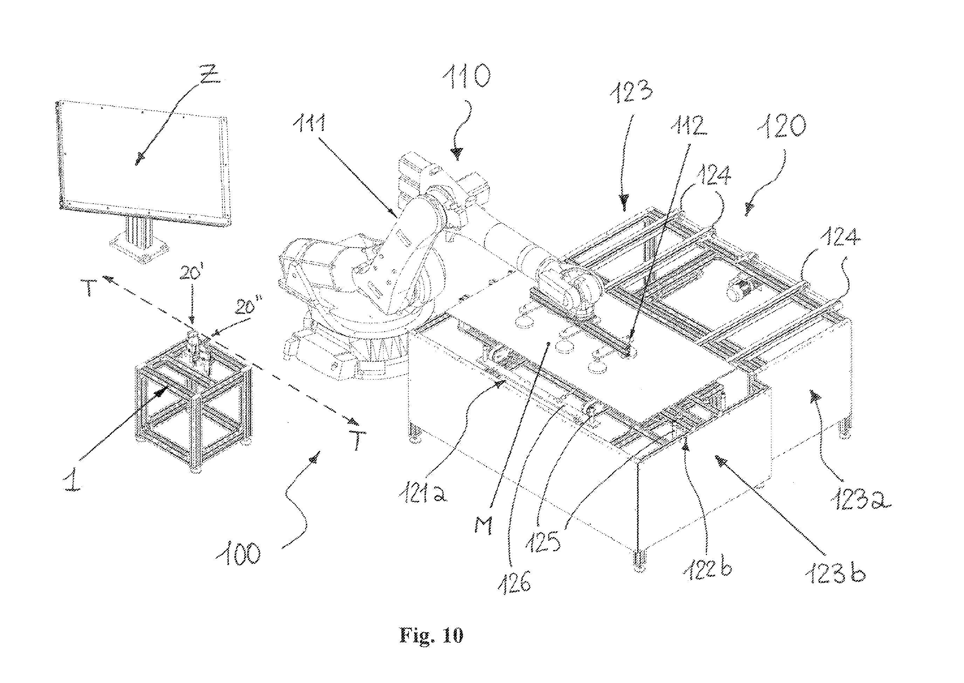

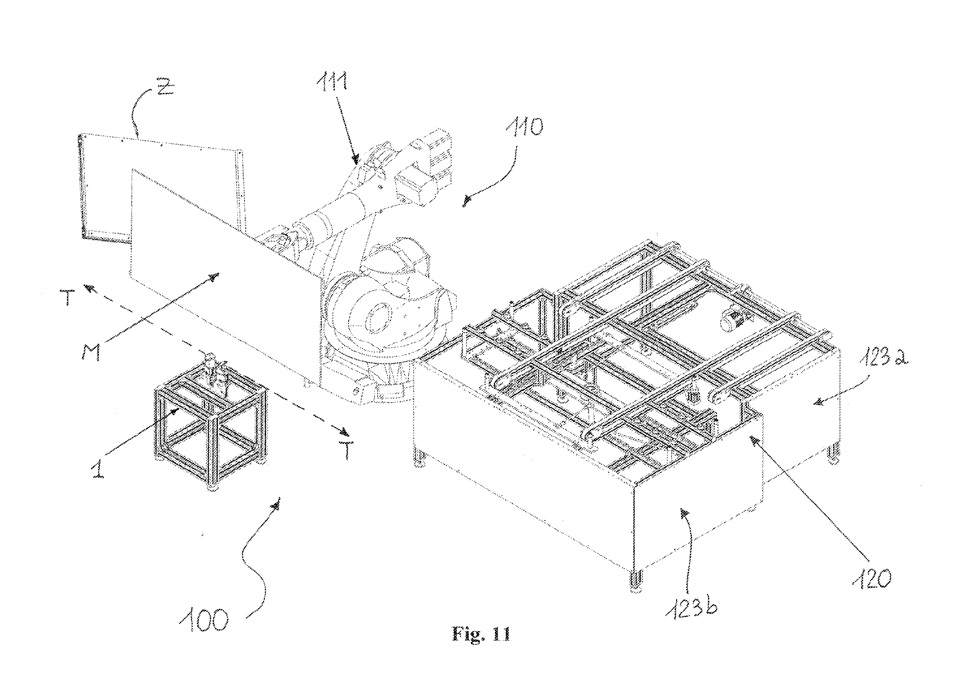

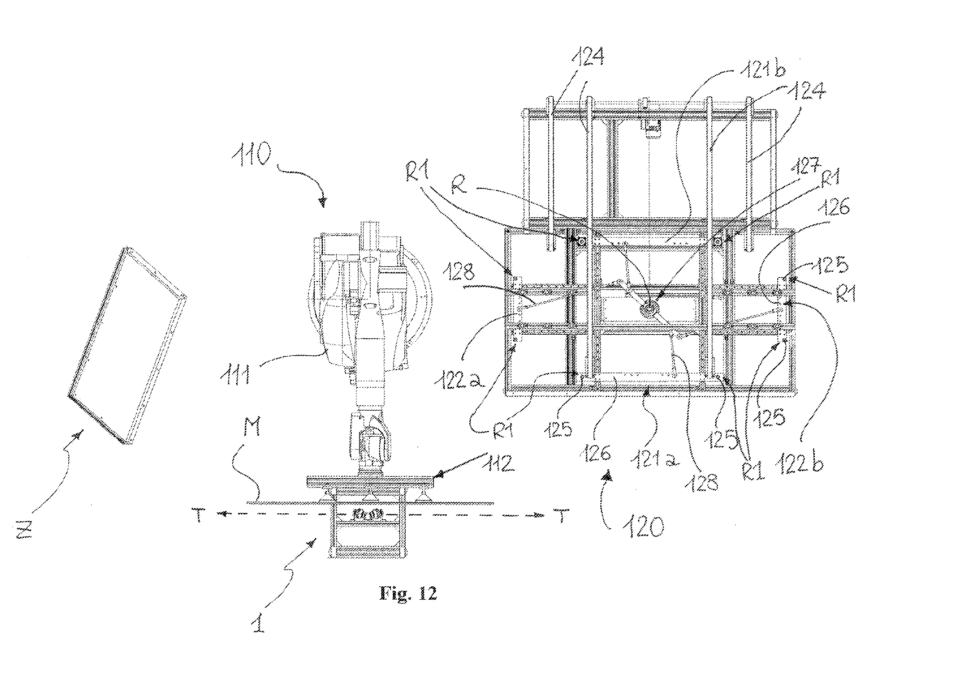

According to the embodiment shown in Figures 10,11 and 12, the movement means 110 comprise at least one robotised anthropomorphic arm 111, which is programmed specifically to pick up photovoltaic modules from a pre-positioning station (see Figure 10) and move them to a trimming station (see Figures 11 and 12) where the trimming device 1 is located.

Preferably, as shown in the attached Figures, the robotised anthropomorphic arm 111 is provided with gripping means 112 of the module M, for example of the suction type.

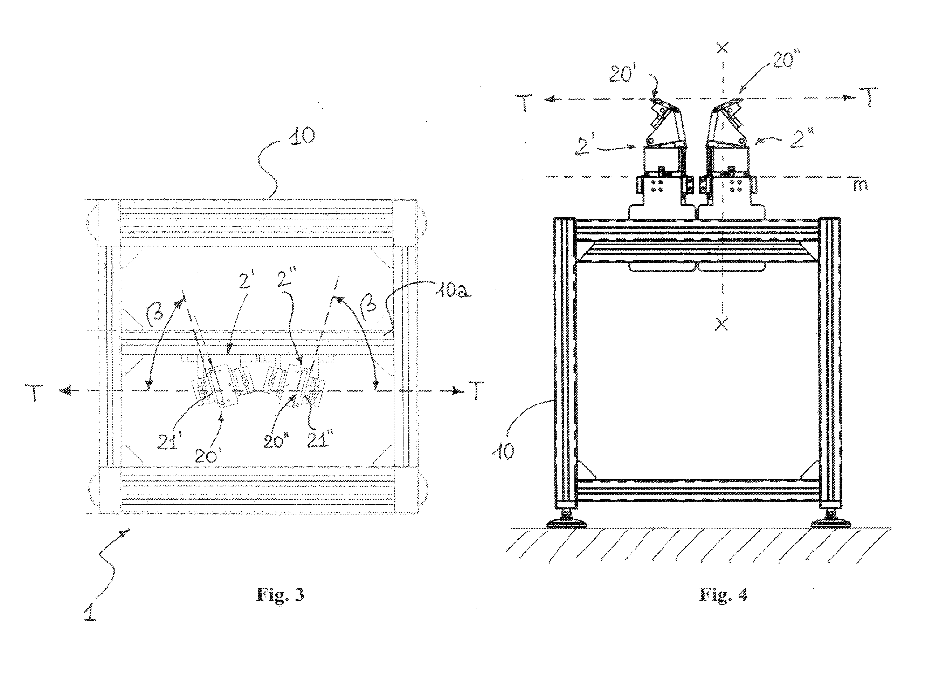

Advantageously, t h e movement means 110 are programmed to move the module M to be trimmed along each side of the outline P in a predefined direction of relative movement T (hereafter pulling direction) which angularly intersects the cutting line 21 of each blade 20', 20" of the trimming device 1, as shown in particular in Figures 3, 11 and 12.

As mentioned above, the movement of the module along the aforesaid pulling direction T is in both directions when two blades 20' and 20" are provided facing in opposite directions.

As shown in Figures 3 and 4, the two blades 20', 20" are therefore positioned with their respective cutting portions facing in opposite directions and in such a way that the respective cutting lines 21', 21" are angled in relation to said predefined pulling direction T by an angle β. The two cutting lines 21', 21" need not necessarily have the same angle β to the direction T.

Preferably, (see Figure 3) the two cutting lines 21', 21" are angled not only in relation to the direction T, but also to each other so as to optimise the cutting/removal work which the respective blades must perform.

Previously it was mentioned that the appropriate pre-positioning or pre-directing of the module before trimming makes it possible to overcome the adaptation limits of the blade related to the excursion breadth along the adjustment axis X permitted by the damping means.

Preferably, to such purpose the system 100 comprises means 120 for pre-directing the module M to be trimmed at least roughly in relation to one or more predefined reference points R, R1 for the movement means 110.

Advantageously, the trimming device 1 and automated trimming system 100 are particularly suitable for operating on photovoltaic modules of a rectangular or square shape, and therefore having two pairs of parallel opposite sides.

In particular, if the processing of modules of a square or rectangular shape is envisaged, or in any case having an outline P with straight sides, the pre-directing of the module consists essentially of an at least rough centring of the module in relation to a main reference point R, and the alignment of the aforesaid straight lines in relation to the remaining secondary reference points R1 which in particular define linear references.

Preferably, the aforesaid pulling direction T is defined in relation to one or more of the aforesaid reference points R, R1 so that when placed in contact with the blade 20 each side forming the outline P of the module M is substantially parallel to said direction T.

As mentioned above, each blade 20', 20" is inclined by an angle α in relation to a predefined reference plane m, which in particular may be orthogonal to the adjustment axis X. Preferably, the movement means 110 are programmed so that the aforesaid pulling direction T is substantially parallel to the aforesaid reference plane m.

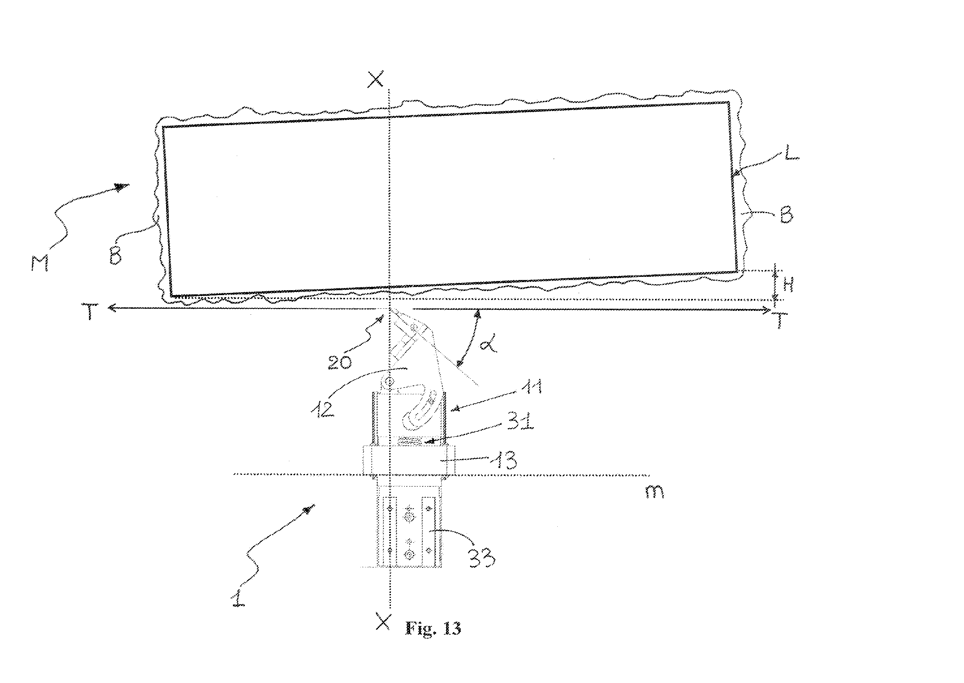

Thanks to the pre-directing of the module, taking the aforesaid pulling line T as reference which may advantageously lie on a plane parallel to the aforesaid reference plane m (for example horizontal) the height difference H (shown in figure 13) at which the two edges of a side present themselves to the blade 20 is very limited.

In operative terms the smaller the aforesaid height difference H, the less broad the excursion of the blade 20 need to be along the adjustment axis X during the passage of single side in contact with said blade.

The pre-directing of the module therefore makes it possible to keep the height difference H within predefined ranges and thereby simplify the control process, and in particular the movement imposed on the module M.

Preferably, the pre-directing means 120 are of the mechanical type. However, means 120 functioning using laser or optical systems may also be envisaged.

According to a preferred embodiment shown in Figures 10, 11 and 12 the pre-directing means 120 are of the mechanical type and comprise a support frame 123 on which an input zone 123a (where the modules to be processed arrive) and a directing zone 123b (where the individual module is pre-directed) may be identified. Above the frame 123 one or more conveyor belts 124 are incorporated suitable to transport a module M from the input zone 123a to the directing zone 123b.

At least two pairs of opposing abutments 121a-121b, 122a-122b suitable for acting on opposite sides of the module M are provided in the directing zone 123b. Such abutments define the aforementioned secondary reference points R1.

In particular, each thrust element consists of two pins 125, projecting in relation to the movement plane defined by the conveyor belts 124 and connected to each other by a rod 126.

The two abutments 121a-121b, 122a-122b of each pair are mechanically connected to move in synchrony with each other while remaining equidistant from a main reference point R or centring point.

More in detail, the pre-directing means 120 comprise a central rotating shaft 127 situated in correspondence with said reference point R. the abutments 121a-121b, 122a-122b are connected to the aforesaid rotating shaft 127 by means of connecting rods 128 appropriately sized and hinged in such a way that with the rotation of the shaft 127 the two abutments of each pair approach opposite sides of the module during the centring step (or move away during the opening step) in a synchronised manner, remaining equidistant from the reference point R (or centring point).

In operative terms the module M is therefore brought to centre itself on the main reference point R and to have its sides substantially aligned with the abutments (secondary reference points R1).

The functioning of the automated trimming system 100 will now be described briefly, in sequence.

A photovoltaic module to be trimmed is sent to the pre-directing means 120 for example by means of a movement line (not shown), external to the trimming system. The module M enters the input zone 123a and from here is transferred by the conveyor belts 124 to the directing zone 123b. The rotation shaft 127 is activated and the abutments 121a-121b or 122a-122b moved against the module M which is thereby directed. The robotised arm 121 picks up the pre-directed module (see Figure 10) and brings it into contact with the trimming device 1 (see Figures 11 and 12). The removal of material is performed for each side of the outline P with the robot rotating the module as needed to expose the various sides of the outline to the blade, in sequence. Starting from an intermediate point on each side, the robot 121 imposes a rectilinear movement on the module M along the pulling direction T first in one direction (with a first blade raised) and then in the opposite direction (with the second blade raised) for each side. When the trimming operation is terminated, the robot transfers the module to the subsequent processing step, shown in Figures 10, 11 and 12 with a positioning plane (marked Z) of the module for the taping operations.

The invention makes it possible to achieve numerous advantages, in part already described.

The trimming device 1 and automated system 100 according to the invention make it possible to automate trimming in an operatively simple and efficient manner which does not require the input of specialised labour.

The trimming operation is conducted with excellent results both in terms of reducing production waste, labour and production times.

The device 1 and system 100 are, moreover, easy and economical to produce.

The invention thus conceived thereby achieves the intended purposes.

Obviously, its practical embodiments may assume forms and configurations different from those described while remaining within the sphere of protection of the invention.

In addition, all the elements may be replaced with technically equivalent elements and the dimensions, shapes and material used may be varied as needed.

## Claims

1. Trimming device for photovoltaic modules comprising a support structure (10) defining a reference plane (m) and two separate blades (20', 20"), which are connected to said support structure (10) and are to be brought into contact with one of said modules (M) in a direction of relative movement (T) substantially parallel to said reference plane (m) to remove the material (B) which exceeds unevenly from the outline (P) of the module, said two blades (20', 20") extending from said support structure (10) on the same side as said reference plane (m) so as to come into contact with the module (M) on the same side as a plane passing through said direction of relative movement (T), **characterised by** the fact that each blade (20',20") is provided with damping means (30) separate from those of the other blade, which means connect the blade (20) to said support structure (10) and allow the blade (20) to move elastically in relation to said support structure along at least one adjustment axis (X) substantially orthogonal to the cutting line (21) of said blade (20) so as to enable said cutting line (21) to follow the outline (P) of said modules (M) during the relative movement in relation to said module (M), for each blade (20', 20") the device (1) comprising a support head (11), connected in a sliding manner to the support structure along said adjustment axis (X) by means of the damping means (30), the two blades (20', 20") being positioned to each other with their respective cutting portions (21) pointing to opposite directions along said direction of relative movement (T) so as to remove the exceeding material (B) in both opposite directions of movement along the direction of relative movement (T).

2. Device according to claim 1, comprising separate damping means (30) for each blade (20', 20"), for each blade said damping means (30) comprising at least one linear actuator (33) to move the support head (11) of a blade (20) along the adjustment axis (X) independently of the other blade (20") so as to differentiate the position of one blade from the other in relation to said reference plane (m).

3. Device according to claim 1 or 2, wherein said damping means (30) comprise at least one spring (31) which is placed between said support head (11) and said support structure (10) to act along said adjustment axis (X) .

4. Device according to one or more of the previous claims, wherein said linear actuator (33) is a pneumatic cylinder.

5. Device according to one or more of the previous claims, comprising means (40) for adjusting the inclination (α) of said blade (20) in relation to said reference plane (m), which is preferably orthogonal to said axis (X).

6. Device according to claim 5, wherein said support head (11) is provided with a mobile portion (12) which rigidly holds said blade (20) and may assume different angular positions around a regulation axis (Y) substantially parallel to said cutting line (21) of said blade (20) in order to vary the inclination (α) of said blade (20) in relation to said predefined reference plane (m).

7. Device according to one or more of the previous claims, wherein said two blades (20', 20") are positioned so that their respective cutting lines (21',21") are angled to each other.

8. Automated trimming system of photovoltaic modules, comprising:
- at least one trimming device (1) according to one or more of the claims from 1 to 7; and
- movement means (110) to bring a photovoltaic module (M) and said at least one blade (20) into contact and to determine a relative movement between the cutting line (21) of said at least one blade (20) and the outline (P) of said module (M) with pressure between the parts.

9. System according to claim 8, wherein said at least one trimming device (1) is in a fixed position and wherein said movement means (110) bring at least one module (M) into contact with said two blades (20', 20") determining a relative movement between said two blades (20', 20") and the outline (P) of said module (M) with pressure between the parts.

10. System according to claim 9, wherein said movement means (110) comprise at least one robotised anthropomorphic arm (111), provided with gripping means (112) for said module (M), preferably of the suction type.

11. System according to one or more of the claims from 8 to 10, comprising means (120) for pre-directing at least roughly said module (M) to be trimmed in relation to one or more predefined reference points (R, R1) for said movement means (110).

12. System according to claim 11, wherein said pre-directing means (120) comprise at least two pairs of opposing abutments (121, 122) suitable for acting on opposite sides of said module (M), the two abutments (121, 122) of each pair being mechanically connected to move in synchrony with each other while remaining equidistant from a main reference point (R).

13. System according to one or more of the claims from 8 to 12, wherein said movement means (110) are programmed to move said module (M) along each side of the outline (P) in a predefined pulling direction (T) which angularly intersects the cutting line (21) of each of said blades (20).

14. System according to claims 11 and 13, wherein said pulling direction (T) is defined in relation to said one or more reference points (R, R1) so that when placed in contact with the blade (20) the sides forming the outline (P) of said module (M) are substantially parallel to said direction (T).

15. System according to claim 13 or 14, wherein each of said two blades (20', 20") is inclined at an angle (α) in relation to a predefined reference plane (m), said movement means (110) being programmed so that said pulling direction (T) is substantially parallel to said reference plane (m).
